# EUROPEAN PATENT APPLICATION

(11) **EP 4 576 614 A1**
(43) Date of publication of application: **25.06.2025**
(21) Application number: 23219650.1
(22) Date of filing: 22.12.2023
(51) Int. Cl.: H04B 17/12, H04B 17/14, H04B 17/21

(54) **PHASE RECIPROCITY CALIBRATION**

(71) Applicant: Nokia Technologies Oy, 02610 Espoo (FI)
(72) Inventor: ROM, Christian, Aalborg (DK); SVENDSEN, Simon, Aalborg (DK); OLESEN, Poul, Støvring (DK); VEJLGAARD, Benny, Gistrup (DK); HARREBEK, Johannes, Aalborg (DK)
(74) Representative: Nokia EPO representatives

(57) **Abstract**

Certain examples provide an apparatus (10, 110) comprising: means (11, 15) for transmitting, to a network node (101), first information (702) indicative of a capability (702) of the apparatus to perform a phase reciprocity calibration procedure (704), wherein the phase reciprocity calibration procedure comprises the apparatus performing: a first part of the phase reciprocity calibration procedure (704_1) using at least one downlink, DL, Phase Differential Calibration Signal, PDCS (707), and a second part of the phase reciprocity calibration procedure (704_2) using at least one uplink, UL, PDCS (708); means (11, 15) for receiving, from the network node, second information (706), wherein the second information is received based at least in part on the transmitted first information, and wherein the second information comprises information for configuring the apparatus to: receive, from the network node, the at least one DL PDCS for enabling the apparatus to perform the first part of the phase reciprocity calibration procedure, and transmit the at least one UL PDCS for enabling the apparatus to perform the second part of the phase reciprocity calibration procedure; means (11, 15) for receiving, from the network node and based at least in part on the received second information, the at least one DL PDCS for enabling the apparatus to perform the first part of the phase reciprocity calibration procedure; and means (11, 15) for transmitting, based at least in part on the received second information, the at least one UL PDCS for enabling the apparatus to perform the second part of the phase reciprocity calibration procedure.

## Description

### TECHNOLOGICAL FIELD

Examples of the disclosure relate to phase reciprocity calibration, in particular an apparatus, a method, a system, a computer program for enabling phase reciprocity calibration. Some examples, though without prejudice to the foregoing, relate to enabling phase reciprocity calibration for deriving non-codebook-based pre-coding for Uplink, UL, Multiple Input Multiple Output, MIMO.

### BACKGROUND

Conventional procedures for determining pre-coding for Uplink, UL, Multiple Input Multiple Output, MIMO are not always optimal. In a conventional codebook based UL MIMO procedure, e.g. such as is specified in 3GPP TS 38.211, a UE is required to rely on a predetermined codebook. The use of such a predetermined codebook may be sub-optimal. In a conventional non-codebook based UL MIMO procedure, e.g. such as is specified in 3GPP TS 38.214, full channel reciprocity is assumed between UL and Downlink, DL. However, a Radio Frequency Front End, RFFE, of a conventional UE may not be not UL/DL reciprocal. Hence, such a conventional non-codebook based UL MIMO procedure performed on a conventional UE may be sub-optimal.

In some circumstances it can be desirable improve UL MIMO.. In some circumstances it can be desirable improve non-codebook-based pre-coding and transmission. In some circumstances it can be desirable to enable phase reciprocity calibration, e.g. for use in deriving non-codebook-based pre-coding for UL MIMO.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

According to various, but not necessarily all, examples of the disclosure there are provided examples as claimed in the appended claims. Any examples and features described in this specification that do not fall under the scope of the independent claims are to be interpreted as examples useful for understanding various embodiments of the invention.

According to at least some examples of the disclosure there is provided an apparatus comprising:
means for transmitting, to a network node, first information indicative of a capability of the apparatus to perform a phase reciprocity calibration procedure, wherein the phase reciprocity calibration procedure comprises the apparatus performing:
   a first part of the phase reciprocity calibration procedure using at least one downlink, DL, Phase Differential Calibration Signal, PDCS, and
   a second part of the phase reciprocity calibration procedure using at least one uplink, UL, PDCS;
means for receiving, from the network node, second information, wherein the second information is received based at least in part on the transmitted first information, and wherein the second information comprises information for configuring the apparatus to:
   receive, from the network node, the at least one DL PDCS for enabling the apparatus to perform the first part of the phase reciprocity calibration procedure, and
   transmit the at least one UL PDCS for enabling the apparatus to perform the second part of the phase reciprocity calibration procedure;
means for receiving, from the network node and based at least in part on the received second information, the at least one DL PDCS for enabling the apparatus to perform the first part of the phase reciprocity calibration procedure; and
means for transmitting, based at least in part on the received second information, the at least one UL PDCS for enabling the apparatus to perform the second part of the phase reciprocity calibration procedure.

According to various, but not necessarily all, examples of the disclosure there is provided a method comprising:
transmitting, to a network node, first information indicative of a capability of the apparatus to perform a phase reciprocity calibration procedure, wherein the phase reciprocity calibration procedure comprises the apparatus performing:
   a first part of the phase reciprocity calibration procedure using at least one downlink, DL, Phase Differential Calibration Signal, PDCS, and
   a second part of the phase reciprocity calibration procedure using at least one uplink, UL, PDCS;
receiving, from the network node, second information, wherein the second information is received based at least in part on the transmitted first information, and wherein the second information comprises information for configuring the apparatus to:
   receive, from the network node, the at least one DL PDCS for enabling the apparatus to perform the first part of the phase reciprocity calibration procedure, and
   transmit the at least one UL PDCS for enabling the apparatus to perform the second part of the phase reciprocity calibration procedure;
receiving, from the network node and based at least in part on the received second information, the at least one DL PDCS for enabling the apparatus to perform the first part of the phase reciprocity calibration procedure; and
transmitting, based at least in part on the received second information, the at least one UL PDCS for enabling the apparatus to perform the second part of the phase reciprocity calibration procedure.

According to various, but not necessarily all, examples of the disclosure there is provided a chipset comprising processing circuitry configured to perform the above-mentioned method.

According to various, but not necessarily all, examples of the disclosure there is provided a module, circuitry, device and/or system comprising means for performing the above-mentioned method.

According to various, but not necessarily all, examples of the disclosure there is provided a computer program comprising instructions, which when executed by an apparatus, cause the apparatus to perform:
transmitting, to a network node, first information indicative of a capability of the apparatus to perform a phase reciprocity calibration procedure, wherein the phase reciprocity calibration procedure comprises the apparatus performing:
   a first part of the phase reciprocity calibration procedure using at least one downlink, DL, Phase Differential Calibration Signal, PDCS, and
   a second part of the phase reciprocity calibration procedure using at least one uplink, UL, PDCS;
receiving, from the network node, second information, wherein the second information is received based at least in part on the transmitted first information, and wherein the second information comprises information for configuring the apparatus to:
   receive, from the network node, the at least one DL PDCS for enabling the apparatus to perform the first part of the phase reciprocity calibration procedure, and
   transmit the at least one UL PDCS for enabling the apparatus to perform the second part of the phase reciprocity calibration procedure;
receiving, from the network node and based at least in part on the received second information, the at least one DL PDCS for enabling the apparatus to perform the first part of the phase reciprocity calibration procedure; and
transmitting, based at least in part on the received second information, the at least one UL PDCS for enabling the apparatus to perform the second part of the phase reciprocity calibration procedure.

According to various, but not necessarily all, examples of the disclosure there is provided an apparatus comprising:
at least one processor; and
at least one memory storing instructions that, when executed by the at least one processor, cause the apparatus at least to:
   transmit, to a network node, first information indicative of a capability of the apparatus to perform a phase reciprocity calibration procedure, wherein the phase reciprocity calibration procedure comprises the apparatus performing:
      a first part of the phase reciprocity calibration procedure using at least one downlink, DL, Phase Differential Calibration Signal, PDCS, and
      a second part of the phase reciprocity calibration procedure using at least one uplink, UL, PDCS;
   receive, from the network node, second information, wherein the second information is received based at least in part on the transmitted first information, and wherein the second information comprises information for configuring the apparatus to:
      receive, from the network node, the at least one DL PDCS for enabling the apparatus to perform the first part of the phase reciprocity calibration procedure, and
      transmit the at least one UL PDCS for enabling the apparatus to perform the second part of the phase reciprocity calibration procedure;
   receive, from the network node and based at least in part on the received second information, the at least one DL PDCS for enabling the apparatus to perform the first part of the phase reciprocity calibration procedure; and
   transmit, based at least in part on the received second information, the at least one UL PDCS for enabling the apparatus to perform the second part of the phase reciprocity calibration procedure.

According to various, but not necessarily all, examples of the disclosure there is provided a non-transitory computer readable medium encoded with instructions that, when executed by at least one processor, causes at least the following to be performed:
transmit, to a network node, first information indicative of a capability of the apparatus to perform a phase reciprocity calibration procedure, wherein the phase reciprocity calibration procedure comprises the apparatus performing:
   a first part of the phase reciprocity calibration procedure using at least one downlink, DL, Phase Differential Calibration Signal, PDCS, and
   a second part of the phase reciprocity calibration procedure using at least one uplink, UL, PDCS;
receive, from the network node, second information, wherein the second information is received based at least in part on the transmitted first information, and wherein the second information comprises information for configuring the apparatus to:
   receive, from the network node, the at least one DL PDCS for enabling the apparatus to perform the first part of the phase reciprocity calibration procedure, and
   transmit the at least one UL PDCS for enabling the apparatus to perform the second part of the phase reciprocity calibration procedure;
receive, from the network node and based at least in part on the received second information, the at least one DL PDCS for enabling the apparatus to perform the first part of the phase reciprocity calibration procedure; and
transmit, based at least in part on the received second information, the at least one UL PDCS for enabling the apparatus to perform the second part of the phase reciprocity calibration procedure.

According to at least some examples of the disclosure there is provided an apparatus comprising:
means for receiving, from a User Equipment, UE, first information indicative of a capability of the UE to perform a phase reciprocity calibration procedure, wherein the phase reciprocity calibration procedure comprises the UE performing:
   a first part of the phase reciprocity calibration procedure using at least one downlink, DL, Phase Differential Calibration Signal, PDCS, and
   a second part of the phase reciprocity calibration procedure using at least one uplink, UL, PDCS;
means for transmitting, to the UE, second information, wherein the second information is transmitted based at least in part on the received first information, and wherein the second information comprises information for configuring the UE to:
   receive, from the apparatus, the at least one DL PDCS for enabling the UE to perform the first part of the phase reciprocity calibration procedure, and
   transmit the at least one UL PDCS for enabling the UE to perform the second part of the phase reciprocity calibration procedure; and
means for transmitting, to the UE, the at least one DL PDCS for enabling the UE to perform the first part of the phase reciprocity calibration procedure.

According to various, but not necessarily all, examples of the disclosure there is provided a method comprising:
receiving, from a User Equipment, UE, first information indicative of a capability of the UE to perform a phase reciprocity calibration procedure, wherein the phase reciprocity calibration procedure comprises the UE performing:
   a first part of the phase reciprocity calibration procedure using at least one downlink, DL, Phase Differential Calibration Signal, PDCS, and
   a second part of the phase reciprocity calibration procedure using at least one uplink, UL, PDCS;
transmitting, to the UE, second information, wherein the second information is transmitted based at least in part on the received first information, and wherein the second information comprises information for configuring the UE to:
   receive, from the apparatus, the at least one DL PDCS for enabling the UE to perform the first part of the phase reciprocity calibration procedure, and
   transmit the at least one UL PDCS for enabling the UE to perform the second part of the phase reciprocity calibration procedure; and
transmitting, to the UE, the at least one DL PDCS for enabling the UE to perform the first part of the phase reciprocity calibration procedure.

According to various, but not necessarily all, examples of the disclosure there is provided a chipset comprising processing circuitry configured to perform the above-mentioned method.

According to various, but not necessarily all, examples of the disclosure there is provided a module, circuitry, device and/or system comprising means for performing the above-mentioned method.

According to various, but not necessarily all, examples of the disclosure there is provided a computer program comprising instructions, which when executed by an apparatus, cause the apparatus to perform:
receiving, from a User Equipment, UE, first information indicative of a capability of the UE to perform a phase reciprocity calibration procedure, wherein the phase reciprocity calibration procedure comprises the UE performing:
   a first part of the phase reciprocity calibration procedure using at least one downlink, DL, Phase Differential Calibration Signal, PDCS, and
   a second part of the phase reciprocity calibration procedure using at least one uplink, UL, PDCS;
transmitting, to the UE, second information, wherein the second information is transmitted based at least in part on the received first information, and wherein the second information comprises information for configuring the UE to:
   receive, from the apparatus, the at least one DL PDCS for enabling the UE to perform the first part of the phase reciprocity calibration procedure, and
   transmit the at least one UL PDCS for enabling the UE to perform the second part of the phase reciprocity calibration procedure; and
transmitting, to the UE, the at least one DL PDCS for enabling the UE to perform the first part of the phase reciprocity calibration procedure.

According to various, but not necessarily all, examples of the disclosure there is provided an apparatus comprising:
at least one processor; and
at least one memory storing instructions that, when executed by the at least one processor,
cause the apparatus at least to:
   receive, from a User Equipment, UE, first information indicative of a capability of the UE to perform a phase reciprocity calibration procedure, wherein the phase reciprocity calibration procedure comprises the UE performing:
      a first part of the phase reciprocity calibration procedure using at least one downlink, DL, Phase Differential Calibration Signal, PDCS, and
      a second part of the phase reciprocity calibration procedure using at least one uplink, UL, PDCS;
   transmit, to the UE, second information, wherein the second information is transmitted based at least in part on the received first information, and wherein the second information comprises information for configuring the UE to:
      receive, from the apparatus, the at least one DL PDCS for enabling the UE to perform the first part of the phase reciprocity calibration procedure, and
      transmit the at least one UL PDCS for enabling the UE to perform the second part of the phase reciprocity calibration procedure; and
transmit, to the UE, the at least one DL PDCS for enabling the UE to perform the first part of the phase reciprocity calibration procedure.

According to various, but not necessarily all, examples of the disclosure there is provided a non-transitory computer readable medium encoded with instructions that, when executed by at least one processor, causes at least the following to be performed:
receive, from a User Equipment, UE, first information indicative of a capability of the UE to perform a phase reciprocity calibration procedure, wherein the phase reciprocity calibration procedure comprises the UE performing:
   a first part of the phase reciprocity calibration procedure using at least one downlink, DL, Phase Differential Calibration Signal, PDCS, and
   a second part of the phase reciprocity calibration procedure using at least one uplink, UL, PDCS;
transmit, to the UE, second information, wherein the second information is transmitted based at least in part on the received first information, and wherein the second information comprises information for configuring the UE to:
   receive, from the apparatus, the at least one DL PDCS for enabling the UE to perform the first part of the phase reciprocity calibration procedure, and
   transmit the at least one UL PDCS for enabling the UE to perform the second part of the phase reciprocity calibration procedure; and
transmit, to the UE, the at least one DL PDCS for enabling the UE to perform the first part of the phase reciprocity calibration procedure.

The following portion of this 'Brief Summary' section describes various features that can be features of any of the examples described in the foregoing portion of the 'Brief Summary' section mutatis mutandis. The description of a function should additionally be considered to also disclose any means suitable for performing that function, or any instructions stored in at least one memory that, when executed by at least one processor, cause an apparatus to perform that function.

In some but not necessarily all examples, the first information indicative of the capability of the apparatus to perform the phase reciprocity calibration procedure comprises an indication of at least one of the following:
that the apparatus comprises means for performing an analogue differential phase estimation;
that the apparatus supports a non-codebook-based UL pre-coding procedure when configured with the at least one DL PDCS and the at least one UL PDCS for enabling the apparatus to perform the first and second parts of the phase reciprocity calibration procedure; or
that the apparatus supports a non-codebook-based UL pre-coding procedure when configured with a sequence of DL PDCSs transmitted by the network node, wherein each DL PDCS of the sequence is pre-coded for each configured UL MIMO layer of the apparatus.

In some but not necessarily all examples, the first information indicative of the capability of the apparatus to perform the phase reciprocity calibration procedure comprises at least one of the following:
a request to receive the at least one DL PDCSs for enabling the apparatus to perform the first part of the phase reciprocity calibration procedure; or
a request to receive the at least one DL PDCSs, wherein the apparatus is not required to report one or more measurements on the received at least one DL PDCSs.

In some but not necessarily all examples, the first information indicative of the capability of the apparatus to perform the phase reciprocity calibration procedure comprises at least one of the following:
a request for an allocation of at least one UL resource for transmitting the at least one UL PDCS;
a request for an allocation of at least one UL gap for transmitting the at least one UL PDCS; or
a request to transmit the at least one UL PDCSs for enabling the apparatus to perform the second part of the phase reciprocity calibration procedure.

In some but not necessarily all examples, receiving the at least one DL PDCS comprises at least one of the following:
receiving, for each UL MIMO layer of the apparatus, at least one DL PDCS; or
receiving a sequence of DL PDCSs transmitted by the network node, wherein each DL PDCS of the sequence is pre-coded for each configured UL MIMO layer of the apparatus.

In some but not necessarily all examples, receiving the at least one DL PDCS comprises at least one of the following:
receiving at least one non pre-coded DL PDCS; or
receiving, for at least some or all configured UL MIMO layers of the apparatus, at least one DL PDCS.

In some but not necessarily all examples, the phase reciprocity calibration procedure comprises at least one of the following:
an analog phase calibration procedure;
equalising one or more reception channels of the apparatus with one or more transmission channels of the apparatus;
determining a phase differential between one or more receiver paths and one or more transmission paths of the apparatus;
calibrating one or more receiver paths and one or more transmission paths of Radio Frequency Front End, RFFE, circuitry of the apparatus such that the one or more receiver paths and the one or more transmission paths are reciprocal;
calibrating one or more transmission paths and one or more reception paths of RFFE circuitry of the apparatus such that the one or more transmission paths and the one or more reception paths are in phase coherence with each other; and
a live network over-the-air runtime procedure.

In some but not necessarily all examples, the first part of the phase reciprocity calibration comprises at least one of the following:
performing a receive, Rx, dynamic calibration procedure during reception of the at least one DL PDCS;
determining, during reception of the at least one DL PDCS via at least one set of antenna ports of the apparatus, at least one set of DL phase differences between the at least one set of antenna ports;
determining, during reception of the at least one DL PDCS via at least one set of Rx paths of the apparatus, a phase differential between the at least one set of Rx paths;
determining at least one phase setting for DL reception for at least one set of receiver chains of the apparatus using the at least one DL PDCS; or
selecting at least one set of antennas of the apparatus to receive the at least one DL PDCS, and determining at least one set of phase difference values for the at least one set of antennas.

In some but not necessarily all examples, wherein the second part of the phase reciprocity calibration comprises at least one of the following:
performing a transmit, Tx, dynamic calibration procedure during transmission of the at least one UL PDCS;
determining, during transmission of the at least one UL PDCS via at least one set of antenna ports of the apparatus, at least one set of UL phase differences between the at least one set of antenna ports;
determining, during transmission of the at least one UL PDCS via at least one set of Tx paths of the apparatus, at least one phase differential between the at least one set of Tx paths;
determining at least one phase setting for UL transmission for at least one set of transmitter chains of the apparatus using the at least one UL PDCS; or selecting at least one set of antennas of the apparatus to transmit the at least one UL PDCS, and determining at least one set of phase difference values for the at least one set of antennas.

In some but not necessarily all examples, the at least one DL PDCS comprises at least one of the following:
a sequence of a plurality of DL PDCSs;
at least one pre-coded DL PDCSs;
a sequence of a plurality of DL PDCSs pre-coded for each of a plurality of configured UL MIMO layers of the apparatus; or
at least one Channel State Information Reference Signal, CSI-RS.

In some but not necessarily all examples, the at least one UL PDCS comprises at least one of the following:
at least one Sounding Reference Signal, SRS; or
at least one signal transmitted by the apparatus that is not required to be validly received or decoded by the network node.

In some but not necessarily all examples, wherein the apparatus further comprises means for transmitting, to the network node, an indication of at least one of the following:
a number of configured UL MIMO layers of the apparatus;
a time period required for the apparatus to perform the second part of the phase reciprocity calibration;
a number or duration of phase iterations per symbol of the at least one UL PDCS per MIMO layer of the apparatus; or
a number or duration of phase iterations per symbol of the at least one DL PDCS per MIMO layer of the apparatus.

In some but not necessarily all examples, the apparatus further comprises means performing the phase reciprocity calibration procedure.

In some but not necessarily all examples, the apparatus further comprises means for transmitting one or more pre-coded transmissions to the network node, wherein the transmission of the one or more pre-coded transmissions is based at least in part on the apparatus performing the phase reciprocity calibration procedure.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION OF THE DRAWINGS

Some examples will now be described with reference to the accompanying drawings in which:
FIG. 1 schematically illustrates an example of a radio telecommunications network;
FIG. 2 schematically illustrates an example of a codebook based UL MIMO procedure;
FIG. 3 schematically illustrates an example of a non-codebook based UL MIMO procedure;
FIG. 4 schematically illustrates an example of an Analogue Differential Phase Estimation Circuit, A-DPEC, in a first state for performing a first part of a phase calibration procedure;
FIG. 5 schematically illustrates an example of the A-DPEC of Figure 4 in a second state for performing a second part of the phase calibration procedure;
FIG. 6 schematically illustrates an example of a receive-transmit, Rx-Tx, MIMO system;
FIG. 7 schematically illustrates a method in accordance with the subject matter described herein;
FIG. 8 schematically illustrates an example of a protocol of an UL MIMO scheme in accordance with the subject matter described herein;
FIG. 9 schematically illustrates an example of a signalling chart for effecting an UL MIMO scheme in accordance with the subject matter described herein;
FIG. 10 schematically illustrates a further example of a signalling chart for effecting an UL MIMO scheme in accordance with the subject matter described herein;
FIG. 11 schematically illustrates an example of an apparatus in accordance with the subject matter described herein; and
Fig. 12 schematically illustrates a computer program in accordance with the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### ABBREVIATIONS/DEFINITIONS

- 3GPP: 3rd Generation Partnership Project
- A-DPEC: Analogue Differential Phase Estimation Circuit
- AoA: Angle of Arrival
- AoD: Angle of Departure
- BB: BaseBand
- CSI: Channel State Information
- CSI-RS: Channel State Information Reference Signal
- DFT: Discrete Fourier Transform
- DL: Downlink
- DMRS: DeModulation Reference Signal
- gNB: next Generation Node B
- GOB: Grid OF Beams
- LNA: Low Noise Amplifier
- MIMO: Multiple Input Multiple Output
- MU-MIMO: Multi-User MIMO
- PA: Power Amplifier
- PDCS: Phase Differential Calibration Signal
- PMI: Precoding Matrix Indicator
- PUCCH: Physical Uplink Control Channel
- PUSCH: Physical Uplink Shared Channel
- RFFE: Radio Frequency Front End
- RS: Reference Signal
- Rx: Receive
- SRI: SRS Resource Indicator
- SRS: Sounding Reference Signal
- SU-MIMO: Single-User MIMO
- TDD: Time Domain Duplex
- TPMI: Transmitted Precoding Matrix Indicator
- Tx: Transmit
- UCI: Uplink Control Information
- UE: User Equipment
- UL: Uplink
- ULA: Uniform Linear Array

### DETAILED DESCRIPTION

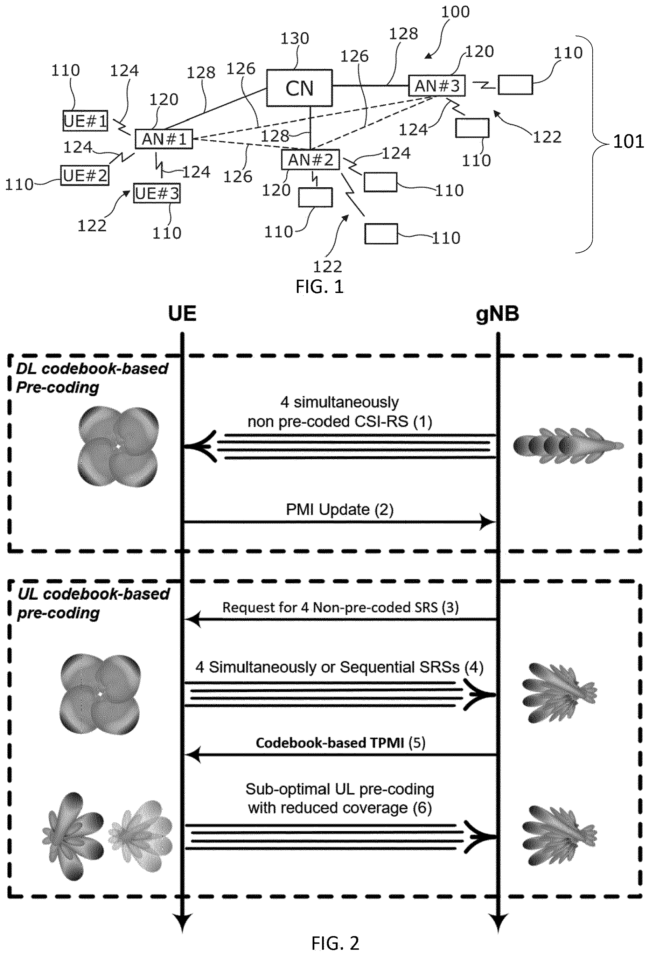

FIG. 1 schematically illustrates an example of a network 100 suitable for use with examples of the present disclosure. The network (also referred to as NW) comprises a plurality of network nodes 101 including: terminal nodes 110 (also referred to as User Equipment, UE), access nodes 120 (also referred to as Radio Access Network, RAN, node, or Base Station, BS), and one or more core nodes 130. The terminal nodes 110 and access nodes 120 communicate with each other. The one or more core nodes 130 may, in some but not necessarily all examples, communicate with each other. The one or more access nodes 120 may, in some but not necessarily all examples, communicate with each other.

The network 100 is, in this example, a radio telecommunications network, i.e. a RAN, in which at least some of the terminal nodes 110 and access nodes 120 communicate with each other using transmission/reception of radio waves.

The network/RAN 100 may be a cellular network comprising a plurality of cells 122 each served by an access node 120. The access nodes 120 comprise cellular radio transceivers. The terminal nodes 110 comprise cellular radio transceivers.

In the particular example illustrated and discussed below, the network 100 is a New Radio, NR, network of the Third Generation Partnership Project, 3GPP, and its fifth generation, 5G, technology. In other examples, the network 100 may be a network beyond 5G, for example a next generation (i.e. sixth generation, 6G) Radio Network that is currently under development (i.e. an evolution of the NR network and its 5G technology).

The interfaces between the terminal nodes 110 and the access nodes 120 are radio interfaces 124 (e.g., Uu interfaces). The interfaces between the access nodes 120 and one or more core nodes 130 are backhaul interfaces 128 (e.g., S1 and/or Next Generation, NG, interfaces).

Depending on the exact deployment scenario, the access nodes 120 may be RAN nodes such as NG-RAN nodes. NG-RAN nodes may be gNodeBs, gNBs, that provide NG user plane and control plane protocol terminations towards the UE. The gNBs connected by means of NG interfaces to a 5G Core (5GC), more specifically to an Access and Mobility Management Function, AMF, by means of an NG Control Plane, NG-C, interface and to a User Plane Function, UPF, by means of an NG User Plane, NG-U, interface. The access nodes 120 may be interconnected with each other by means of Xn interfaces 126.

The cellular network 100 may be configured to operate in licensed frequency bands, or unlicensed frequency bands (not least such as: unlicensed bands that rely upon a transmitting device to sense the radio resources/medium before commencing transmission, such as via a Listen Before Talk, LBT, procedure; and a 60GHz unlicensed band where beamforming may be required in order to achieve required coverage).

The access nodes 120 may be deployed in an NG standalone operation/scenario. The access nodes 120 may be deployed in a NG non-standalone operation/scenario. The access nodes 120 may be deployed in a Carrier Aggregation, CA, operation/scenario. The access nodes 120 may be deployed in a Dual Connectivity, DC, operation/scenario, i.e., Multi Radio Access Technology - Dual Connectivity, MR-DC, or NR-DC. The access nodes 120 may be deployed in a Multi Connectivity, MC, operation/scenario.

In such non-standalone/dual connectivity deployments, the access nodes 120 may be interconnected to each other by means of X2 or Xn interfaces, and connected to an Evolved Packet Core, EPC, by means of an S1 interface or to the 5GC by means of a NG interface.

The access nodes 120 are network elements in the network responsible for radio transmission and reception in one or more cells 122 to or from the terminal nodes 110. The access nodes 120 are the network termination of a radio link. Each access node may host one or more Transmission Reception Points, TRPs.

An access node 120 may be implemented as a single network equipment, or have a split architecture that is disaggregated/distributed over two or more RAN nodes, such as a Central Unit, CU, a Distributed Unit, DU, a Remote Radio Head-end, RRH, using different functional-split architectures and different interfaces.

The terminal nodes 110 are network elements in the network that terminate the user side of the radio link. They are devices allowing access to network services. Terminal node 110 functionalities may be performed also by Mobile Termination, MT, part of an Integrated Access and Backhaul, IAB, node. The terminal nodes 110 may be referred to as User Equipment, UE, mobile terminals or mobile stations.

The term 'User Equipment' may be used to designate mobile equipment comprising means, such as a smart card, for authentication/encryption etc. such as a Subscriber Identity Module, SIM. A SIM/SIM card can be a memory chip, a module, or a Universal Subscriber Identity Module (USIM). In some examples, the term 'User Equipment' can be used to designate a location/position tag, a hyper/smart, a hyper/smart sensor, or a mobile equipment comprising circuitry embedded as part of the user equipment for authentication/encryption such as a software SIM.

In the following description:
a terminal node may be referred to simply as UE 110
an access node may be referred to simply as a gNB 120,
the network itself may be referred to simply as NW 100, and
a node of the network (which may be, for example, UE 110 or gNB 120) may be referred to simply as NW node 101.

There now follows a brief overview of the different types of DL MIMO schemes in 5G NR.

A high-level categorization of DL MIMO schemes can be considered as follows.

DL MIMO schemes can be categorized into:
Single-User MIMO schemes, SU-MIMO, or
Multi-User MIMO schemes, MU-MIMO.

The SU-MIMO schemes can be either:
Sounding Reference Signal, SRS, based (i.e. involving SRS based DL pre-coding calculated at NW), or
non-pre-coded Channel State Information Reference Signal, CSI-RS, based (i.e. involving Precoding Matrix Indicator, PMI, feedback from UE).

The MU-MIMO schemes can be either:
pre-coded CSI-RS based, or
non-pre-coded CSI-RS based.

Pre-coded RSs, such as a pre-coded CSI-RSs, can be considered to be a "layer" of RSs that are steered. In this regard, they undergo a matrix multiplication (either from a table, i.e. a codebook, or the network calculates the matrix values). Non-pre-coded RSs are sent without such beam steering, and are thus "raw", which allows for a full characterisation of a radio channel matrix H.

A codebook can be considered to correspond to a set of values that a UE is recommended to use in order to steer its layers/data streams spatially via the UE's antennas. In effect the codebook comprise a set of values that are used to control mainly the phase at each antenna port of the UE to steer each layer/data stream.

SRS based SU-MIMO schemes have typically been discarded in practical live networks. This is because most UEs are typically implemented with more parallel receiver chains than transmitter chains. Consequently, SU-MIMO deployment typically mainly uses CSI-RS based schemes.

The CSI-RS SU-MIMO scheme uses a Type I codebook which is based on very specific antenna assumptions at a gNB, with a fully pre-characterized lookup table of precoding values.

The CSI-RS MU-MIMO scheme uses a Type II codebook that allows for a more accurate matching of the precoding to the radio channel. Type II enables pre-coded/beamformed CSI-RS that are sent in different angular directions.

There now follows a brief overview of a current codebook based UL MIMO procedure deployed in the field for 5G networks.

FIG. 2 schematically illustrates an example of a codebook based UL MIMO procedure for determining UL precoding. In this example, it is assumed that there are 4 antenna ports/MIMO layers at both a gNB side and a UE side.

Firstly, a DL codebook-based pre-coding procedure is performed, namely steps (1) and (2), for determining codebook-based DL pre-coding at the gNB.

In step (1), the gNB transmits 4 orthogonal non-pre-coded CSI-RS (one from each antenna port). The beam shape will typically be a UE indicated best Synchronization Signal Block, SSB, or CSI beam, and the CSI-RS can be sent either sequentially or as shown simultaneously.

In step (2), having received each of the non-pre-coded CSI-RS on all receiver chains and determined/selected an optimal PMI from an appropriate pre-defined codebook, the UE transmits a PMI update. In this regard, the UE transmits the selected optimal PMI to the gNB via Uplink Control Information, UCI.

The main steps of the UL codebook-based pre-coding procedure comprise the following steps (3) to (6).

In step (3), the gNB requests the UE to transmit a non-pre-coded SRS from each UL antenna port.

In step (4), non-pre-coded SRS resources are transmitted from UE to the gNB (e.g. according to TS 38.214). The SRSs can be sent sequentially or as shown simultaneously, depending on the UE capabilities. However, simultaneously transmitted SRSs will reduce the power of each SRS in order to comply with the requirements for maximum combined Tx power at the UE and thus will reduce the coverage.

Following step (4), the gNB estimates the channel based on the received SRSs using pre-coded receive beams (i.e. as derived in step (2) above) and the gNB determines the best TPMI from an appropriate pre-defined codebook.

In step (5), the gNB transmits a Rank and the determined TPMI to the UE. In this regard, the gNB may send precoding information and a number of layers recommended by the gNB to the UE via Downlink Control Information, DCI, using a specific format DCI format 0_1 which contains different fields.

In step (6), the UE determines UL pre-coding based on the received TPMI, and the UE transmits using the UL pre-coding. Since the UL pre-coding is based on the received TPMI, this may result in a sub-optimal UE precoding, as the codebook used to determine the TPMI assumes a Uniform Linear array, ULA, antenna design at the UE.

An optimum pre-coding is indicated with the bottom right UE antenna radiation patterns shown in FIG. 2 next to the actual, but suboptimal, pre-coding indicated with the bottom left UE antenna radiation patterns shown in FIG. 2. The UE antenna radiation patterns for suboptimal pre-coding have a larger angular spread than that for optimum pre-coding.

As exemplified by the scenario in FIG. 2, one of the drawbacks of this procedure is that the UE relies on a predetermined codebook, i.e. as specified in 3GPP TS 38.211. This codebook assumes ULA at the UE side, leading to a Discrete Fourier Transform, DFT, based "grid of beams", GOB. However, UE antenna arrays may not be uniform and linear as the antenna patterns have directive variation of gain and phase, as well as inter-antenna distances that are rarely half a wavelength (distances can be up to 5 wavelengths for 9 GHz for example). This will result in a non-optimal codebook. In addition, the transmission in step (1) of non-pre-coded SRSs may reduce the coverage as potential additional combined antenna gain cannot be used.

In order to allow for a solution that does not rely on a UE ULA assumption, a non-codebook-based procedure may be used, as specified in 3GPP TS 38.214, enables the UE to determine UL pre-coding by using downlink CSI-RS.

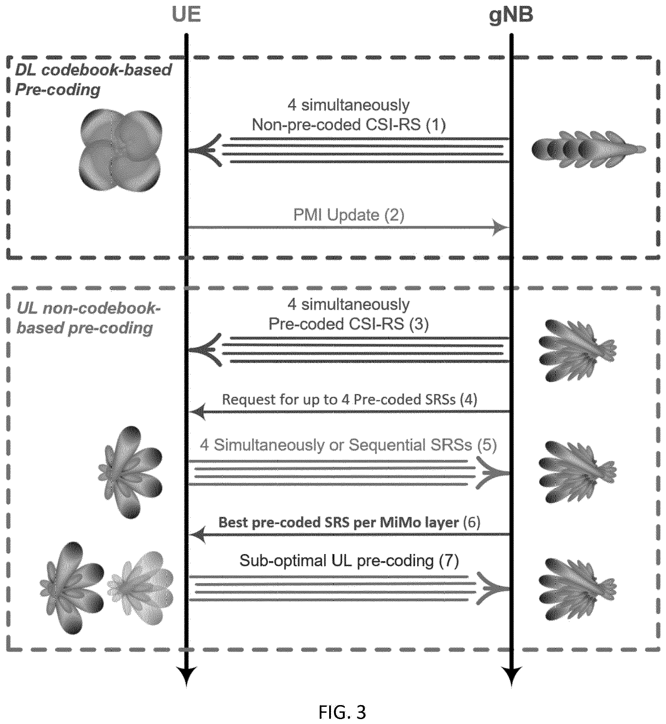

FIG. 3 schematically illustrates an example of a non-codebook based UL MIMO procedure for determining UL pre-coding. In this example, it is assumed that there are 4 antenna ports/ MIMO layers at both a gNB side and a UE side.

Steps (1) and (2) are included to illustrate a procedure for determining codebook-based DL pre-coding at the gNB. These steps are the same as steps(1) and (2) of FIG. 2.

The main steps of the UL non-codebook-based pre-coding procedure comprise the following steps (3) to (7).

In step (3), the gNB, having derived DL pre-coding in step (2), can now send pre-coded CSI-RS to the UE for the UE to derive UL non-codebook-based pre-coding.

In step (4), the gNB requests the UE to transmit pre-coded SRSs, using the pre-coding derived in step (3).

In step (5), pre-coded SRS resources are transmitted from UE to the gNB (e.g. according to TS 38.214). The SRSs can be sent sequentially or simultaneously (as shown), depending on the UE capabilities. However, simultaneously transmitted SRSs will reduce the coverage due to the requirements for maximum combined Tx power at the UE (i.e. to comply with Specific Absorption Rate, SAR, and Maximum Permissible Exposure, MPE, limits).

In step (6), following receipt of the SRSs in step (5), the gNB selects the best SRS for each MIMO layer and reports the selected SRSs to the UE using SRS Resource Indicator, SRI.

In step (7), the UE determines UL pre-coding based on DL channel estimation, and the UE transmits using the UL pre-coding. Since the UE's UL pre-coding is based on DL channel estimation, it may result in a non-optimum UL pre-coding. This is because the DL portion of the UE's RFFE cannot be assumed to be reciprocal with the UL portion of the UE's RFFE.

The DL channel estimation is estimated by the gNB sending a known data sequence in downlink (i.e. the CSI-RS) to the UE. This sequence is then "affected" by a mix of the gNB's beam, radio channel and UE antenna patterns. These effects all together are then estimated via channel estimation from the known reference signal. This resulting channel serves as a base from which to derive the UL precoding.

An optimum pre-coding is indicated with the bottom right UE antenna radiation patterns shown in FIG. 3 next to the actual, but suboptimal, pre-coding indicated with the bottom left UE antenna radiation patterns shown in FIG. 3. The UE antenna radiation patterns for suboptimal pre-coding have a larger angular spread than that for optimum pre-coding.

As exemplified by the scenario in FIG. 3, this UL MIMO procedure for deriving UL non-codebook based pre-coding assumes full channel reciprocity between UL and DL. However, a UE's RFFE is not UL/DL reciprocal. This is because UL phase difference between antenna ports can dynamically vary independently from the DL phase difference between antenna ports. This is one of the main reasons that non-codebook-based UL MIMO has not been widely implemented/used and deployed commercially to date.

As will be set out and discussed in further detail, examples of the present disclosure seek to enable a UE to establish radio channel reciprocity, e.g. UL/DL reciprocity of the UE's RFFE, thereby enabling autonomous non-codebook UL pre-coding at the UE. In this regards, examples of the present disclosure seek to enable a UE to perform a phase calibration procedure.

The phase reciprocity calibration procedure may comprises:
equalising one or more reception channels of the UE with one or more transmission channels of the UE;
determining a phase differential between one or more receiver paths and one or more transmission paths of the UE;
calibrating one or more receiver paths and one or more transmission paths of RFFE circuitry of the UE such that the one or more receiver paths and the one or more transmission paths are reciprocal; and/or
calibrating one or more transmission paths and one or more reception paths of RFFE circuitry of the UE such that the one or more transmission paths and the one or more reception paths are in phase coherence with each other.

The phase reciprocity calibration procedure may be a live network over-the-air runtime procedure (i.e. as compared and contrasted to a lab test mode calibration procedure).

The phase reciprocity calibration procedure may be an analog phase calibration procedure that can be performed by an Analogue Differential Phase Estimation Circuit, A-DPEC, as discussed below.

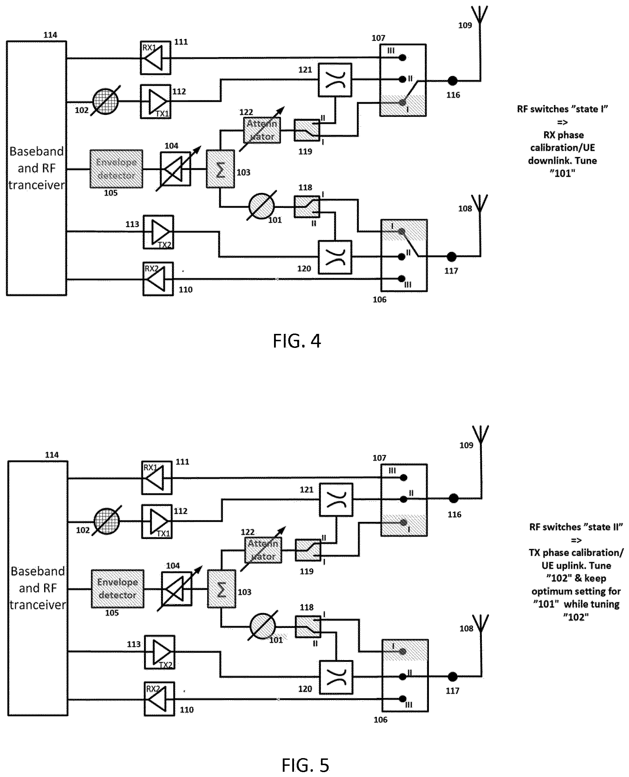

FIGs. 4 and 5 schematically illustrates an example of an Analogue Differential Phase Estimation Circuit, A-DPEC. The A-DPEC is one example of means for performing phase reciprocity calibration. The A-DPEC provide hardware that enables a UE to measure a phase difference, at the UE's antennas, between a pair of antennas of the UE in DL and enables the UE to ensure that the same phase difference is applied at the antennas for a pre-coded UL signal.

The following summarizes a phase reciprocity calibration procedure that can be performed by a UE (i.e. a UE that supports/has the capability to perform such a phase reciprocity calibration procedure, not least such as by virtue of the UE having an A-DPEC). The phase reciprocity calibration procedure comprises two parts that are required to be performed in order to determine a correct phase setting for an UL signal.

First part of the phase reciprocity calibration procedure - Rx dynamic calibration.

In order to perform the first part of the phase reciprocity calibration procedure, the A-DPEC is configured in a first state, wherein switches 106 and 107 are set in State I as shown in FIG. 4.

In such a state, a reference signal (e.g. a phase difference calibration signal) may be provided, by a gNB in the downlink direction, to the UE. During reception of the reference signal, a phase shifter 101 is tuned to different settings. A Radio Frequency, RF, power output from a power splitter 103 is maximized when the RF signals from the two antennas 109 and 108 are phase aligned and added. An optimum DL phase setting is defined as a phase setting used at the phase shifter 101 when a maximum detected signal or voltage is observed at an output of the envelope detector 105.

Second part of the phase reciprocity calibration procedure - Tx dynamic calibration.

In order to perform the second part of the phase reciprocity calibration procedure, the A-DPEC is configured in a second state, wherein switches 106 and 107 are set in State II as shown in FIG. 5.

The phase shifter 102 is set to a default state, for example 0 degrees. An optimum Tx phase difference can be determined by any transmit signal since such signals are coupled to the A-DPEC via couplers 120 and 121. As such, no special reference signal is required for Tx dynamic calibration.

During transmission of the reference signal, the phase shifter 102 is tuned (analog tuning as illustrated, or digitally tuned in the baseband unit), while the phase shifter 101 is kept constant at the value found in the part of the phase reciprocity calibration procedure, until a maximum signal is measured at the output of the envelope detector 105. An optimum phase setting for UL transmission is defined as a phase setting of the phase shifter 102 when a maximum signal is observed at the output from the envelope detector.

When the switches 106 and 107 are in State III, the A-DPEC can operate in a normal RX mode.

The reference signal used in the first or second part of the phase reciprocity calibration procedure may be a phase difference calibration signal or a Phase Tracking Reference Signal, PTRS. In 3GPP TS 38.211 PTRSs are specified. However, the conventional purpose of such PTRSs is different than that as described above for performing the phase reciprocity calibration procedure. Conventionally, PTRSs are used for tracking a phase of Tx and Rx local oscillators in order to enable a suppression of phase noise and phase error. The PTRSs are mainly used for mmWave. Also, conventionally, PTRSs are associated with DeModulation Reference Signal, DMRS, during Physical Uplink Shared Channel, PDSCH, data transmission and/or Physical Uplink Control Channel, PUSCH, data transmission.

In examples of the present disclosure, the reference signal used for the phase reciprocity calibration procedure (i.e. a DL RS for Rx dynamic calibration and an UL RS for Tx dynamic calibration) is sent prior to PDSCH/PUSCH in order to establish UE phase coherence during data reception/transmission. Thus, a conventional PTRS associated with DMRS during PDSCH/PUSCH data transmission would not be usable for the phase reciprocity calibration procedure of examples of the present disclosure.

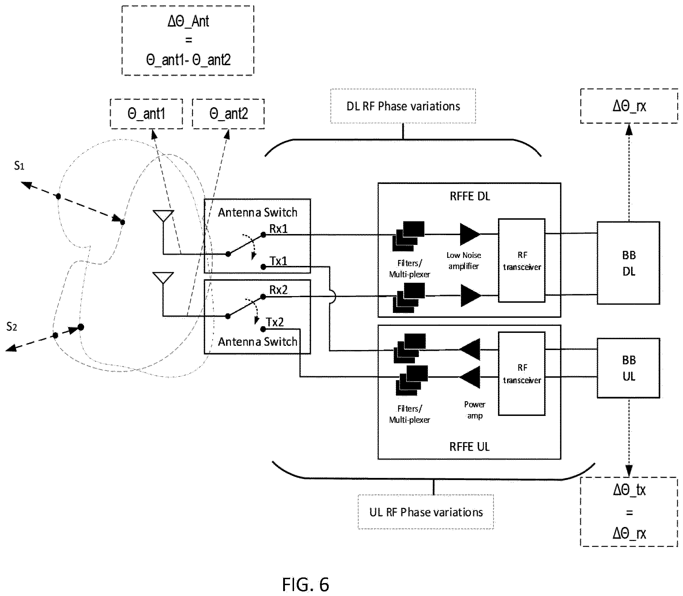

FIG. 6 schematically illustrates an example of a receive-transmit, Rx-Tx, MIMO system. This figure shows a simplified view of a directive signal phase variation in a DL/UL chain.

The variables in the system denote phase values at different measurement points:
∘ Antenna 1 feed point 0_ant1,
∘ Antenna 2 feed point Θ_ant2
∘ Baseband Rx ΔΘ_rx
∘ Baseband Tx ΔΘ_tx

The incoming signals are defined as: S1 and S2

As previously mentioned, the conventional procedure for UL MIMO when using non-codebook-based transmission relies on a UE to perform BaseBand, BB, channel estimation in DL as a reference (assuming UL/DL radio channel reciprocity in Time Domain Duplex, TDD) in order to control UL signal precoding. As such, the conventional procedure for UL MIMO assumes that a phase difference between signals from selected Rx paths from antenna elements down to the baseband is equal or very close to a phase signal difference between selected Tx paths from baseband to the antenna elements.

Accordingly, a prerequisite at the UE for proper pre-coding of an UL signal based on a DL signal would be that the downlink relative phase difference of ΔΘ_ant = Θ_ant1 - Θ_ant2 in downlink and uplink are equal.

However, there are numerous sources of DL-UL phase difference asymmetry between UE radio RX and TX paths, e.g.:
- Low Noise Amplifiers, LNAs, (in a DL/Rx path of a UE's RFFE) have different properties than Power Amplifiers, PAs (in an UL/Tx path of the UE's RFFE). An impact of group delay variation is more sever for a PA than for an LNA for different load impedances. In addition, the group delay itself is also different between the PA and the LNA.
- Different phase behaviour of filters in DL and UL - as only some of the filters are common for both DL and UL.
- A user's hand/finger grabbing/toughing the device. This will increase the severity of an antenna load impedance mismatch as compared to free space alone - which will have different impact on the PA and the LNA.

A typical approach for current/conventional device modem development is to calibrate sources of phase difference asymmetry, and then use calibration tables to compensate for the phase difference asymmetry in an UL baseband unit. However, such a calibration is typically done in a conductive manner (50 Ω) in a laboratory and is thus a table of values. A problem with such a calibration approach is that the compensation is static (at 50 Ω) for a given set of settings (large amount of target frequencies, higher number of combinations). However, the antennas change impedance as a function of frequency, dynamic usage in the field and may actually never (or very seldom) be 50 Ω - which will affect an input impedance of the LNA and an output impedance of the PA. The input of an LNA is less sensitive to impedance changes than the output of a PA, whereby the PA will contribute to larger variation of the phase than the LNA under load mismatch, making a conducted 50 Ω calibration inaccurate. A free space impedance load of an antenna is static and known for a given frequency and could, in theory, be included in a calibration procedure. However, the main problem is that the user behaviour may affect the antenna impedance in an unknown manner - which implies that a dynamic real-life calibration of the phase differences between DL and UL will be needed to ensure best possible UL performance.

The A-DPEC hardware architecture described above with reference to FIGs 4 and 5 can be used to address this problem, whereby an optimum non-codebook-based UL pre-coding can be derived based on DL reference signals at the UE. However, since the A-DPEC operates in the analog domain, it can only process one phase differential at the time. This requires a gNB to send per MIMO-layer pre-coded reference signals (optimized for Angle of Arrival, AoA, and/or Angle of Departure, AoD) in order for the UE (A-DPEC) to be able to perform a per MIMO-layer or AoA/AoD phase estimation.

As will be discussed in further detail below, certain examples of the present invention provide an apparatus and signaling framework for supporting enhanced UE UL MIMO precoding, i.e. optimum non-codebook-based UL MIMO pre-coding.

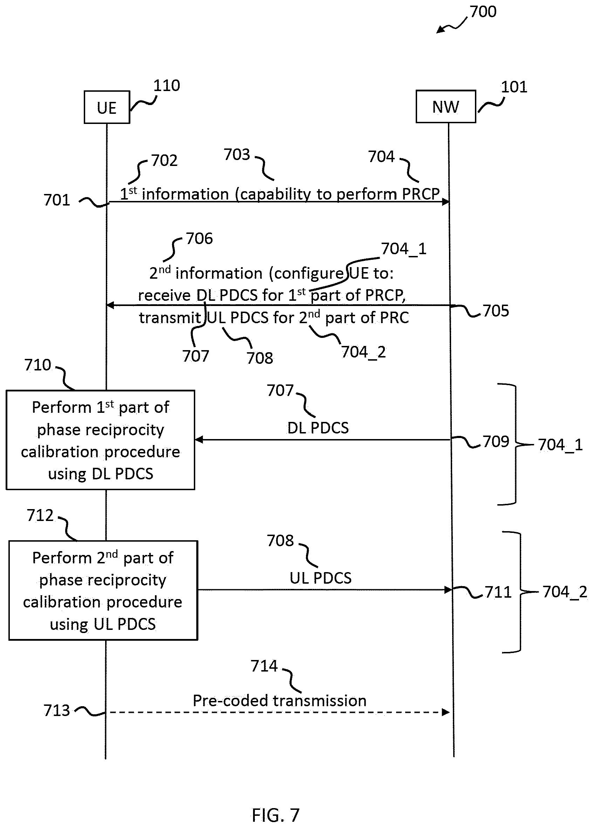

FIG. 7 schematically illustrates a method 700 according to an example of the subject matter described herein. FIG. 7 can be considered to illustrate a plurality of methods, in the sense that FIG. 7 can be considered to illustrate one or more actions performed by/at a plurality of actors/entities (e.g. apparatuses such as a UE 110, and a network node 101 [not least such as a gNB 120]). FIG. 7 can therefore be considered to illustrate a plurality of individual methods performed by each respective individual actor/entity of the plurality of the actors/entities.

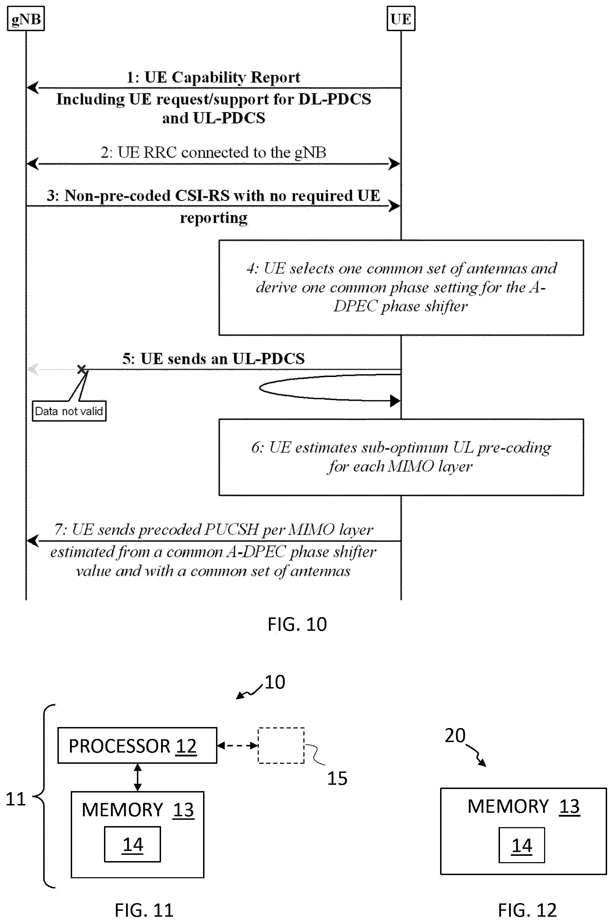

The component blocks of FIG. 7 are functional, and the functions described can be performed by a single physical entity, such as an apparatus as described with reference to FIG. 11, wherein the apparatus may be embodied either as a UE 110 or network node 101. The functions described can also be implemented by a computer program, such as is described with reference to FIG. 12. The blocks illustrated in FIG. 7 can therefore represent actions in a method, functionality performed by an apparatus, and/or sections of instructions/code in a computer program.

In block 701, a UE 110transmits, to a network node NW 101,first information 702 indicative of a capability 703 of the UE to perform a phase reciprocity calibration procedure 704.

In some examples, the phase reciprocity calibration procedure comprises:
equalising one or more reception channels of the UE with one or more transmission channels of the UE;
determining a phase differential between one or more receiver paths and one or more transmission paths of the UE;
calibrating one or more receiver paths and one or more transmission paths of Radio Frequency Front End, RFFE, circuitry of the UE such that the one or more receiver paths and the one or more transmission paths are reciprocal; and/or
calibrating one or more transmission paths and one or more reception paths of RFFE circuitry of the UE such that the one or more transmission paths and the one or more reception paths are in phase coherence with each other.

In some examples, the phase reciprocity calibration procedure is an analog phase calibration procedure. In some examples, the phase reciprocity calibration procedure is a live network over-the-air runtime procedure (in contrast to a lab test mode calibration procedure).

The phase reciprocity calibration procedure 704 is a two part procedure that comprises the UE performing:
a first part 704_1 of the phase reciprocity calibration procedure using at least one downlink, DL, Phase Differential Calibration Signal, PDCS, and
a second part 704_2 of the phase reciprocity calibration procedure using at least one uplink, UL, PDCS.

The first information indicative of the capability of the UE to perform the phase reciprocity calibration procedure may comprises an indication that the UE comprises means for performing an analogue differential phase estimation (e.g. such as an A-DPEC).

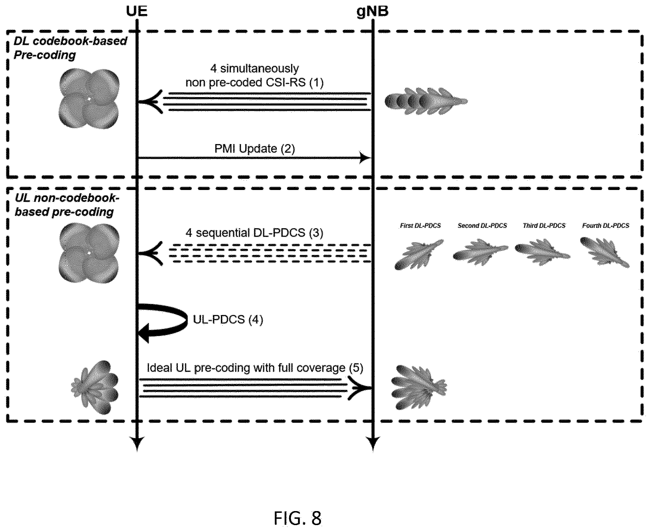

In some examples, the first information indicative of the capability of the UE to perform the phase reciprocity calibration procedure comprises an indication that the UE supports a non-codebook-based UL pre-coding procedure (such as discussed below with respect to FIG. 8) when configured with the at least one DL PDCS (e.g. a sequence of DL PDCSs transmitted by the NW, wherein each DL PDCS of the sequence is pre-coded for each configured UL MIMO layer of the UE) and the at least one UL PDCS (e.g. a scheduling the UE to transmit UL PDCSs) for enabling the UE to perform the first and second parts of the phase reciprocity calibration procedure.

In some examples, the first information transmitted by the UE to the NW further comprises a request to receive the at least one DL PDCSs for enabling the UE to perform the first part of the phase reciprocity calibration procedure. In some examples, the UE is not required to report, to the NW, any measurements on the received at least one DL PDCSs.

In some examples, the first information transmitted by the UE to the NW further comprises:
a request for an allocation of at least one UL resource for transmitting the at least one UL PDCS;
a request for an allocation of at least one UL gap for transmitting the at least one UL PDCS; or
a request to transmit the at least one UL PDCSs for enabling the UE to perform the second part of the phase reciprocity calibration procedure.

In some examples, the UE further transmits, to the NW, an indication of one or more of the following:
a number of configured UL MIMO layers of the UE;
a time period required for the UE to perform the second part of the phase reciprocity calibration;
a number or duration of phase iterations per symbol of the at least one UL PDCS per MIMO layer of the UE; or
a number or duration of phase iterations per symbol of the at least one DL PDCS per MIMO layer of the UE.

In block 705, based at least in part on the received fist information, the NW sends to the UE 110, second information 706 for configuring the UE to:
receive, from the NW, the at least one DL PDCS 707 for enabling the UE to perform the first part of the phase reciprocity calibration procedure, and
transmit the at least one UL PDCS 708 for enabling the UE to perform the second part of the phase reciprocity calibration procedure.

In block 709, the UE receives from the NW in accordance with the configuration information, the at least one DL PDCS for enabling the UE to perform the first part of the phase reciprocity calibration procedure.

In some examples, the at least one DL PDCS comprises one or more of:
a sequence of a plurality of DL PDCSs;
at least one pre-coded DL PDCSs;
a sequence of a plurality of DL PDCSs pre-coded for each of a plurality of configured UL MIMO layers of the UE; or
at least one Channel State Information Reference Signal, CSI-RS.

In some examples, referred to as a Type II phase calibration procedure, at least one DL PDCS is received for each UL MIMO layer of the UE. In addition or alternatively, a sequence of DL PDCSs is received wherein each DL PDCS of the sequence is pre-coded for each configured UL MIMO layer of the UE.

In some examples, referred to as a Type I phase calibration procedure, at least one non-pre-coded DL PDCS is received. In addition or alternatively, at least one DL PDCS is received for at least some or all configured UL MIMO layers of the UE.

In block 710, the UE performs the first part of the phase reciprocity calibration procedure using the received at least one DL PDCS.

In some examples, performing the first part of the phase reciprocity calibration comprises one or more of:
performing a receive, Rx, dynamic calibration procedure during reception of the at least one DL PDCS;
determining, during reception of the at least one DL PDCS via at least one set of antenna ports of the UE, at least one set of DL phase differences between the at least one set of antenna ports;
determining, during reception of the at least one DL PDCS via at least one set of Rx paths of the UE, a phase differential between the at least one set of Rx paths;
determining at least one phase setting for DL reception for at least one set of receiver chains of the UE using the at least one DL PDCS; and
selecting at least one set of antennas of the UE to receive the at least one DL PDCS, and determining at least one set of phase difference values for the at least one set of antennas.

In block 711, the UE transmits, to the NW, the at least one UL PDCS for enabling the UE to perform the second part of the phase reciprocity calibration procedure.

In some examples, the at least one UL PDCS comprises one or more of:
at least one Sounding Reference Signal, SRS; and
at least one signal transmitted by the UE that is not required to be validly received or decoded by the NW.

In block 712, the UE performs the second part of the phase reciprocity calibration procedure using the transmitted at least one UL PDCS.

In some examples, performing the second part of the phase reciprocity calibration comprises one or more of:
performing a transmit, Tx, dynamic calibration procedure during transmission of the at least one UL PDCS;
determining, during transmission of the at least one UL PDCS via at least one set of antenna ports of the UE, at least one set of UL phase differences between the at least one set of antenna ports;
determining, during transmission of the at least one UL PDCS via at least one set of Tx paths of the UE, at least one phase differential between the at least one set of Tx paths;
determining at least one phase setting for UL transmission for at least one set of transmitter chains of the UE using the at least one UL PDCS; or
selecting at least one set of antennas of the UE to transmit the at least one UL PDCS, and determining at least one set of phase difference values for the at least one set of antennas.

The UE, having performed the phase reciprocity calibration procedure and established DL/UL reciprocity, is then able to carry out a procedure to determine non-codebook based UL precoding (i.e. wherein such a procedure, for optimal precoding, assumes DL/UL reciprocity), such as is discussed below with reference to FIG. 8.

In block 713, the UE transmits one or more pre-coded transmissions to the NW.

The phase reciprocity calibration procedure may be performed regularly in order to accommodate/adjust for variations in radio channel conditions and/or a user's hand grip. In this regard, one may consider that it is effectively performed as a continuous process that constantly runs.

FIG. 8 schematically illustrates an example of a protocol of an UL MIMO scheme in accordance with the subject matter described herein. This shows a non-codebook based UL MIMO procedure for determining UL pre-coding. In this example, it is assumed that there are 4 antenna ports/MIMO layers at both a gNB side and a UE side.

In step (1), similar to step (1) of FIGs 2 and 3, a gNB transmit 4 orthogonal non-pre-coded CSI-RS (one from each antenna port). The beam shape may be a best/most optimal SSB or CSI beam that has previously been indicated by UE. The CSI-RS can be sent either sequentially or simultaneously as shown.

In step (2), similar to step (1) of FIGs 2 and 3, having received each of the non-pre-coded CSI-RS on all receiver chains and determined a best/most optimal PMI from an appropriate pre-defined codebook, the UE transmits the selected PMI to the gNB via UCI.

Prior to performing step (2), the gNB receives a capability report from the UE (not shown), wherein the capability report comprise a field to inform the gNB that the UE supports and can derive optimum non-codebook-based UL pre-coding (i.e. when the gNB schedules a DL PDCS). In this regard, the UE may inform the gNB that it is implemented with an A-DPEC and is capable of performing a phase reciprocity calibration procedure and therefore can derive optimum non-codebook-based UL pre-coding.

In step (3), the gNB sends a sequence of pre-coded DL PDCSs to the UE for the UE to derive optimum non-codebook-based pre-coding. The pre-coded DL PDCSs are sent sequentially for each configured UL MIMO layer.

The gNB also schedules an UL reference signal (i.e. an UL PDCS), or an UL-gap, that the UE can use for non-codebook-based UL pre-coding calibration. The scheduling of the UL reference signal or UL-gap allows the gNB to control and mitigate any interference resulting from the UL signal from UE needed for the phase calibration. Both options are viable, however scheduling the UE to transmit an UL PDCS would potentially perform better since such UL PDCSs would not be power limited compared to the PUSCH. UL gaps are however power limited to remain under emission mask of gaps.

In step (4), the UE calibrates the UL pre-coding, for each MIMO layer, utilizing a UL PDCSs transmitted by the UE. In this regard, the UE may sweep between different pre-codings (to ensure optimum performance) within a symbol duration. This may result in a non-valid UL signal being transmitted (as indicated via the curved arrow).

A UE implemented with a high number of UL MIMO layers (antennas) might, depending on its hardware implementation, need more than one symbol to perform the UL pre-coding calibration. As such, this could be signalled to the gNB as a static requirement in the UE capability report or as a dynamic signaling. In this regard, the UE capability report may include an indication of the number of required symbols for UL pre-coding calibration (for example, 2 antennas = 1 symbol, 3 antennas = 2 symbols, 3 antennas = 3 symbols etc.).

The UL pre-coding calibration of current phase differences at its antennas can be performed at a much lower periodicity than a DL channel characterization (e.g. 100 to 200 ms vs, 1 to 10 ms). This is because the phase differences at the antennas change as a function of UE rotation and not as fast-fading in the channel.

In step (5), the UE can now send PUSCH messages with optimum non-codebook-based UL pre-coding.

Various examples of the disclosure may find application 6G UE/Smartphones that support UL MIMO, not least for example in frequency ranges below approximately 10 GHz.

An advantage of examples of the disclosure is that they provide an enhanced UL MIMO scheme that enables autonomous non-codebook-based UL MIMO. This may enable:
more accurate UL beams, due to there being no need for DFT based codebook (TPMI), and thus better gain in UL due to more accurate beam steering at the UE an "improved type of overhead", due to DL RSs (e.g. DL CSI-RS) being preferable to UL RSs (e.g. SRS) from a power consumption and network interference point of view. An SRS overhead reduction factor equal to the number of layers may be achieved (e.g. 4 layers => 4 times less Uplink SRS). In addition, there would be a lower periodicity for the UL pre-coding calibration than for the channel characterization. This would also improve the overall uplink capacity as it would free up many more OFDM symbols that could be used for PUSCH, rather than SRS.

Examples of the present disclosure provide a framework to support the transmission of reference signals (i.e. transmission of DL PDCS by the NW for reception by the UE, and transmission of UL PDCS by the UE) to enable phase calibration (UE reciprocity) at the UE.

In some examples, pre-coded DL PDCS are transmitted to the UE (e.g. Type II Pre-Coded CSI-RS). In this regard, the DL PDCS is pre-coded (i.e. a gNB spatial filter is applied) in the same manner as used for PDSCH. The gNB would subsequently also receive PUSCH from the UE using the same spatial filter. The DL PDCS are transmitted in a sequential fashion to enable analog phase calibration at the UE.

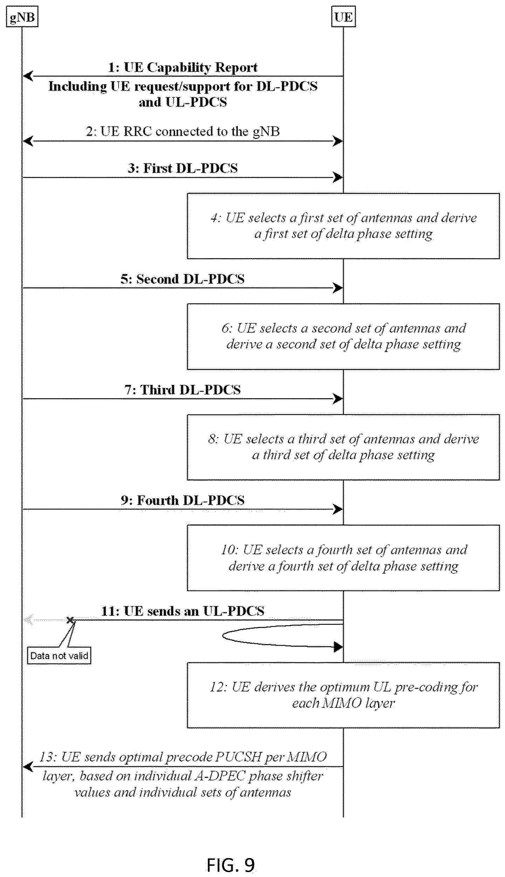

Sending sequential and individually pre-coded DL PDCS to the UE (as per FIG. 9) may help ensure optimum non-codebook-based UL pre-coding at the UE. However, a UE implemented with A-DPEC will also be able to estimate UL pre-coding (albeit sub-optimal UL pre-coding) if the DL PDCS are not pre-coded (e.g. Type I). The pre-coded RS (e.g. Type II) and non-pre-coded RS (e.g. Type I) cases are illustrated with the signaling charts of FIG. 9 and Fig. 10 respectively.

FIG. 9 schematically illustrates an example of a signalling chart for effecting an UL MIMO scheme in accordance with the subject matter described herein. This Figure shows the Type II case for deriving (optimum) non-codebook-based UL pre-coding, where the DL PDCS is pre-coded. In this example, it is assumed that there are 4 antenna ports/MIMO layers at both a gNB side and a UE side (in this regard, the UE has 4 sets of antennas).

In step 1: The UE informs the gNB that the UE supports optimum non-codebook-based UL pre-coding, when configured with sequentially transmitted DL PDCS individually pre-coded for each configured UL MIMO layer of the UE.

In step 2: The UE is assumed to be RRC connected to the gNB.

In step 3: The gNB transmits a first pre-coded DL PDCS to the UE.

In step 4: The UE selects a first set of antennas suitable for receiving the first transmitted pre-coded DL PDCS and the UE derives optimum delta phase settings (i.e. phase shifts) between the selected first set of antennas.

In step 5: The gNB transmits a second pre-coded DL PDCS to the UE.

In step 6: The UE selects a second set of antennas suitable for receiving the second transmitted pre-coded DL PDCS and the UE derives optimum delta phase settings (i.e. phase shifts) between the selected second set of antennas.

In step 7: The gNB transmits a third pre-coded DL PDCS to the UE.

In step 8: The UE selects a third set of antennas suitable for receiving the third transmitted pre-coded DL PDCS and the UE derives optimum delta phase settings (i.e. phase shifts) between the third second set of antennas.

In step 7: The gNB transmits a fourth pre-coded DL PDCS to the UE.

In step 8: The UE selects a fourth set of antennas suitable for receiving the fourth transmitted pre-coded DL PDCS and the UE derives optimum delta phase settings (i.e. phase shifts) between the fourth second set of antennas.

Steps 5 to 10 effectively repeat steps 3 and 4 for the remaining configured UL MIMO layers.

In step 11: The UE transmits a UL PDCS for UL pre-coding calibration. The UL PDCS should be configured similar to that of the below mentioned PUSCH message(s). The transmitted UL PDCS is primarily for use for the UE to perform the pre-coding calibration (i.e. performing the second part of the phase reciprocity calibration procedure discussed above with respect to FIG. 2) and hence the UL PDCS may not be a validly transmitted signal which is validly received at the gNB (which is indicated via the curved arrow). The UL PDCS may have a known scheduling to the gNB in order to avoid UL interference performance degradation and to avoid the UL PDCS colliding with other signals. By transmitting the UL PDCS from the UE, the UL PDCS scheduling is known to the gNB to avoid the UL PCDS colliding with other signals creating a performance degradation of, for example, PUSCH or PUSCH from other UEs.

In step 12: The UE derives an optimum UL pre-coding for each UL MIMO layer of the UE.

In step 13: The UE sends the optimum non-codebook-based pre-coded PUSCH messages for each UL MIMO layer.

An optimal utilization of a UE implemented with A-DPEC is for the gNB to transmit sequential pre-coded PDCSs (e.g. transmit sequential pre-coded CSI-RS signals/beams) as per the method of FIG. 9. However, if the gNB were, for some reason, instead to transmit legacy non-pre-coded PDCSs, the UE can still utilize its A-DPEC, but with a sub-optimal estimation of the UL pre-coding as per the method of FIG 10.

FIG. 10 schematically illustrates a further example of a signalling chart for effecting an UL MIMO scheme in accordance with the subject matter described herein. This Figure shows the Type I case for deriving a (sub-optimum) non-codebook-based UL pre-coding, where the DL PDCS is not pre-coded.

In step 1: The UE informs the gNB that it supports non-codebook-based UL pre-coding. In this regard, the UE may send a capability report informing the gNB that the UE supports non-codebook-based UL pre-coding, when configured with sequentially transmitted PDCS (e.g. sequentially transmitted CSI-RS), individually pre-coded for each configured UL MIMO layer of the UE. In some examples, the UE sends a capability report to the gNB informing the gNB that the UE is implemented with A-DPEC.

In step 2: The UE is assumed to be RRC connected to the gNB.

In step 3: The gNB transmits a non-pre-coded DL PDCS signal.

In step 4: The UE selects a common set of antennas suitable for the receiving the transmitted non-pre-coded DL PDCS and the UE derives a common delta phase settings between the selected antennas.

In step 5: The UE transmits an UL PDCS for UL pre-coding calibration. This UL reference signal should be configuration like the configured similar to that of the below mentioned PUSCH message(s). The transmitted UL PDCS is primarily for use for the UE to perform the pre-coding calibration (i.e. performing the second part of the phase reciprocity calibration procedure discussed above with respect to FIG. 2) and hence the UL PDCS may not be a validly transmitted signal which is validly received at the gNB (which is indicated via the curved arrow). The UL PDCS may have a known scheduling to the gNB in order to avoid UL interference performance degradation and to avoid the UL PDCS colliding with other signals. By transmitting the UL PDCS from the UE, the UL PDCS scheduling is known to the gNB to avoid the UL PCDS colliding with other signals creating a performance degradation of, for example, PUSCH or PUSCH from other UEs.

In step 6: The UE estimates a (sub-optimum) UL pre-coding for each of the configured UL MIMO layer.

In step 7: The UE sends the estimated sub-optimum non-codebook-based pre-coded PUSCH messages for each UL MIMO layer.

In some examples, the non-codebook-based UL pre-coding at the UE is derived via:
- transmitting of a sequence of pre-coded DL PDCS for each configured MIMO layer, and an individual selection of antenna sets for each configured MIMO layer
- transmitting simultaneously pre-coded DL PDCS, or non-pre-coded DL PDCS, and a common selection of an antenna set for all configured MIMO layers.

In some examples, the sequence of pre-coded DL PDCS may be based on a sequence of pre-coded CSI-RS. An example of such signal design is to take a current pre-coded CSI-RS for a first MIMO layer, and repeat this sequentially for all of the other configured MIMO layers. The duration of the pre-coded CSI-RS can be 1 symbol or more depending on the needed time for the UE to evaluate the phase combinations. Such a change in the duration of the pre-coded CSI-RS could be effected via modifying the specifications of 3GPP TS 38.331, in particular the "PUSCH-Config" as specified in 3GPP 5G NR could be amended to include the following Information Elements:

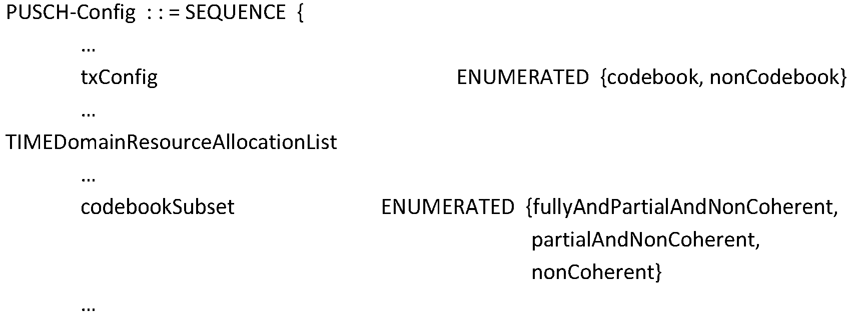

It will be understood that each block and combinations of blocks illustrated in FIGs. 7 to 10, as well as the further functionality described above, can be implemented by various means, such as hardware, firmware, and/or software including one or more computer program instructions. For example, one or more of the functions described above can be performed by a duly configured apparatus (such as an apparatus, or UE, comprising means for performing the above described functionality). One or more of the functions/functionality described above can be embodied by a duly configured computer program (such as a computer program comprising computer program instructions which embody the functions/functionality described above and which can be stored by a memory storage device and performed by a processor).

As will be appreciated, any such computer program instructions can be loaded onto a computer or other programmable apparatus (i.e. hardware) to produce a machine, such that the instructions when performed on the programmable apparatus create means for implementing the functions/functionality specified in the blocks. These computer program instructions can also be stored in a computer-readable medium that can direct a programmable apparatus to function in a particular manner, such that the instructions stored in the computer-readable memory produce an article of manufacture including instruction means which implement the function specified in the blocks. The computer program instructions can also be loaded onto a programmable apparatus to cause a series of operational actions to be performed on the programmable apparatus to produce a computer-implemented process such that the instructions which are performed on the programmable apparatus provide actions for implementing the functions/functionality specified in the blocks.

Various, but not necessarily all, examples of the present disclosure can take the form of a method, an apparatus, or a computer program. Accordingly, various, but not necessarily all, examples can be implemented in hardware, software or a combination of hardware and software.

Various, but not necessarily all, examples of the present disclosure are described using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational block/steps/actions to be performed by the processor(s) to produce a computer implemented process such that the instructions which execute on the processor(s) provide block/steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

FIG. 11 schematically illustrates a block diagram of an apparatus 10 for performing the methods, processes, procedures and signalling described in the present disclosure and illustrated in FIGs. 7 to 10, in this regard the apparatus can perform the roles of the UE 110 or a network node 101 (not least such as a gNB 120), in the methods illustrated and described above. The component blocks of FIG. 11 are functional and the functions described can be performed by a single physical entity.

The apparatus comprises a controller 11, which could be provided within a device such as a UE 110, or a network node 101.

The controller 11 can be embodied by a computing device, not least such as those mentioned above. In some, but not necessarily all examples, the apparatus can be embodied as a chip, chip set, circuitry or module, i.e. for use in any of the foregoing. As used here 'module' refers to a unit or apparatus that excludes certain parts/components that would be added by an end manufacturer or a user.

Implementation of the controller 11 can be as controller circuitry. The controller 11 can be implemented in hardware alone, have certain aspects in software including firmware alone or can be a combination of hardware and software (including firmware).

The controller 11 can be implemented using instructions that enable hardware functionality, for example, by using executable instructions of a computer program 14 in a generalpurpose or special-purpose processor 12 that can be stored on a computer readable storage medium 13, for example memory, or disk etc, to be executed by such a processor 12.

The processor 12 is configured to read from and write to the memory 13. The processor 12 can also comprise an output interface via which data and/or commands are output by the processor 12 and an input interface via which data and/or commands are input to the processor 12. The apparatus can be coupled to or comprise one or more other components 15 (not least for example: a radio transceiver, sensors, input/output user interface elements and/or other modules/devices/components for inputting and outputting data/commands).

The memory 13 stores instructions such as a computer program 14 comprising such instructions (e.g. computer program instructions/code) that controls the operation of the apparatus 10 when loaded into the processor 12. The instructions of the computer program 14, provide the logic and routines that enables the apparatus to perform the methods, processes and procedures described in the present disclosure and illustrated in FIGs. 7 to 10. The processor 12 by reading the memory 13 is able to load and execute the computer program 14.

The instructions may be comprised in a computer program, a non-transitory computer readable medium, a computer program product, a machine readable medium. The term "non-transitory," as used herein, is a limitation of the medium itself (i.e. tangible, not a signal) as opposed to a limitation on data storage persistency (e.g. RAM vs. ROM). In some but not necessarily all examples, the computer program instructions may be distributed over more than one computer program.

Although the memory 13 is illustrated as a single component/circuitry it can be implemented as one or more separate components/circuitry some or all of which can be integrated/removable and/or can provide permanent/semi-permanent/ dynamic/cached storage.

Although the processor 12 is illustrated as a single component/circuitry it can be implemented as one or more separate components/circuitry some or all of which can be integrated/removable. The processor 12 can be a single core or multi-core processor.

The apparatus can include one or more components for effecting the methods, processes and procedures described in the present disclosure and illustrated in FIGs. 7 to 10. It is contemplated that the functions of these components can be combined in one or more components or performed by other components of equivalent functionality. The description of a function should additionally be considered to also disclose any means suitable for performing that function.

Where a structural feature has been described, it can be replaced by means for performing one or more of the functions of the structural feature whether that function or those functions are explicitly or implicitly described.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

The apparatus can, for example, be a client device, a server device, a mobile cellular telephone, a base station in a mobile cellular telecommunication system, a wireless communications device, a hand-portable electronic device, a location/position tag, a hyper tag etc. The apparatus can be embodied by a computing device, not least such as those mentioned above. However, in some examples, the apparatus can be embodied as a chip, chip set, circuitry or module, i.e. for use in any of the foregoing.

In one example, the apparatus is embodied on a hand held portable electronic device, such as a mobile telephone, mobile communication device, wearable computing device or personal digital assistant, that can additionally provide one or more audio/text/video communication functions (for example tele-communication, video-communication, and/or text transmission (Short Message Service (SMS)/ Multimedia Message Service (MMS)/emailing) functions), interactive/non-interactive viewing functions (for example web-browsing, navigation, TV/program viewing functions), music recording/playing functions (for example Moving Picture Experts Group-1 Audio Layer 3 (MP3) or other format and/or (frequency modulation/amplitude modulation) radio broadcast recording/playing), downloading/sending of data functions, image capture function (for example using a (for example in-built) digital camera), and gaming functions, or any combination thereof.

In examples where the apparatus is provided within a UE 110, the apparatus comprises:
at least one processor 12; and
at least one memory 13 storing instructions that, when executed by the at least one processor 12, cause the apparatus at least to:
   transmit, to a network node, first information indicative of a capability of the apparatus to perform a phase reciprocity calibration procedure, wherein the phase reciprocity calibration procedure comprises the apparatus performing:
      a first part of the phase reciprocity calibration procedure using at least one downlink, DL, Phase Differential Calibration Signal, PDCS, and
      a second part of the phase reciprocity calibration procedure using at least one uplink, UL, PDCS;
   receive, from the network node, second information, wherein the second information is received based at least in part on the transmitted first information, and wherein the second information comprises information for configuring the apparatus to:
      receive, from the network node, the at least one DL PDCS for enabling the apparatus to perform the first part of the phase reciprocity calibration procedure, and
      transmit the at least one UL PDCS for enabling the apparatus to perform the second part of the phase reciprocity calibration procedure;
   receive, from the network node and based at least in part on the received second information, the at least one DL PDCS for enabling the apparatus to perform the first part of the phase reciprocity calibration procedure; and
   transmit, based at least in part on the received second information, the at least one UL PDCS for enabling the apparatus to perform the second part of the phase reciprocity calibration procedure.

In examples where the apparatus is provided within a network node 101 (not least such as a gNB 120), the apparatus comprises:
at least one processor 12; and
at least one memory 13 storing instructions that, when executed by the at least one processor 12, cause the apparatus at least to:
   receive, from a User Equipment, UE, first information indicative of a capability of the UE to perform a phase reciprocity calibration procedure, wherein the phase reciprocity calibration procedure comprises the UE performing:
      a first part of the phase reciprocity calibration procedure using at least one downlink, DL, Phase Differential Calibration Signal, PDCS, and
      a second part of the phase reciprocity calibration procedure using at least one uplink, UL, PDCS;
   transmit, to the UE, second information, wherein the second information is transmitted based at least in part on the received first information, and wherein the second information comprises information for configuring the UE to:
      receive, from the apparatus, the at least one DL PDCS for enabling the UE to perform the first part of the phase reciprocity calibration procedure, and
      transmit the at least one UL PDCS for enabling the UE to perform the second part of the phase reciprocity calibration procedure; and
   transmit, to the UE, the at least one DL PDCS for enabling the UE to perform the first part of the phase reciprocity calibration procedure.

According to some examples of the present disclosure, there is provided a system comprising at least one UE 110 and a network node 101 as described above.

The above described examples find application as enabling components of: tracking systems, automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things (IOT); Vehicle-to-everything (V2X), virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

FIG. 12, illustrates a computer program 14 which may be conveyed via a delivery mechanism 20. The delivery mechanism 20 can be any suitable delivery mechanism, for example, a machine readable medium, a computer-readable medium, a non-transitory computer-readable storage medium, a computer program product, a memory device, a solid-state memory, a record medium such as a Compact Disc Read-Only Memory (CD-ROM) or a Digital Versatile Disc (DVD) or an article of manufacture that comprises or tangibly embodies the computer program 14. The delivery mechanism can be a signal configured to reliably transfer the computer program. An apparatus can receive, propagate or transmit the computer program as a computer data signal.

In certain examples of the present disclosure, there is provided a computer program comprising instructions, which when executed by an apparatus (UE 110), cause the apparatus to perform at least the following or for causing performing at least the following:
transmit, to a network node, first information indicative of a capability of the apparatus to perform a phase reciprocity calibration procedure, wherein the phase reciprocity calibration procedure comprises the apparatus performing:
   a first part of the phase reciprocity calibration procedure using at least one downlink, DL, Phase Differential Calibration Signal, PDCS, and
   a second part of the phase reciprocity calibration procedure using at least
   one uplink, UL, PDCS;
receive, from the network node, second information, wherein the second information is received based at least in part on the transmitted first information, and wherein the second information comprises information for configuring the apparatus to:
   receive, from the network node, the at least one DL PDCS for enabling the apparatus to perform the first part of the phase reciprocity calibration procedure, and
   transmit the at least one UL PDCS for enabling the apparatus to perform the second part of the phase reciprocity calibration procedure;
receive, from the network node and based at least in part on the received second information, the at least one DL PDCS for enabling the apparatus to perform the first part of the phase reciprocity calibration procedure; and
transmit, based at least in part on the received second information, the at least one UL PDCS for enabling the apparatus to perform the second part of the phase reciprocity calibration procedure.

In certain examples of the present disclosure, there is provided computer program comprising instructions, which when executed by an apparatus (network node 101, not least such as a gNB 120), cause the apparatus to perform at least the following or for causing performing at least the following:
receive, from a User Equipment, UE, first information indicative of a capability of the UE to perform a phase reciprocity calibration procedure, wherein the phase reciprocity calibration procedure comprises the UE performing:
   a first part of the phase reciprocity calibration procedure using at least one downlink, DL, Phase Differential Calibration Signal, PDCS, and
   a second part of the phase reciprocity calibration procedure using at least one uplink, UL, PDCS;
transmit, to the UE, second information, wherein the second information is transmitted based at least in part on the received first information, and wherein the second information comprises information for configuring the UE to:
   receive, from the apparatus, the at least one DL PDCS for enabling the UE to perform the first part of the phase reciprocity calibration procedure, and
   transmit the at least one UL PDCS for enabling the UE to perform the second part of the phase reciprocity calibration procedure; and
transmit, to the UE, the at least one DL PDCS for enabling the UE to perform the first part of the phase reciprocity calibration procedure.

References to 'computer program', 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' can refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not.

Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

In this description, the wording 'connect', 'couple' and 'communication' and their derivatives mean operationally connected/coupled/in communication. It should be appreciated that any number or combination of intervening components can exist (including no intervening components), i.e. so as to provide direct or indirect connection/coupling/communication. Any such intervening components can include hardware and/or software components.

As used herein, the term "determine/determining" (and grammatical variants thereof) can include, not least: evaluating, calculating, computing, processing, deriving, measuring, investigating, identifying, looking up (for example, looking up in a table, a database or another data structure), ascertaining and the like. Also, "determining" can include receiving (for example, receiving information), retrieving/accessing (for example, retrieving/accessing data in a memory), obtaining and the like. Also, " determine/determining" can include resolving, selecting, choosing, establishing, inferring and the like.

As used herein, a description of an action should also be considered to disclose enabling, and/or causing, and/or controlling that action. For example, a description of transmitting information should also be considered to disclose enabling, and/or causing, and/or controlling transmitting information. Similarly, for example, a description of an apparatus transmitting information should also be considered to disclose at least one means or controller of the apparatus enabling, and/or causing, and/or controlling the apparatus to transmit the information."

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example performing such functionality or functionalities may be caused in an apparatus by a processor that executes instructions stored in a memory of the apparatus.

References to a parameter, or value of a parameter, should be understood to refer to "data indicative of", "data defining" or "data representative of" the relevant parameter/parameter value if not explicitly stated (unless the context demands otherwise). The data may be in any way indicative of the relevant parameter/parameter value, and may be directly or indirectly indicative thereof.

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are used with an inclusive not an exclusive meaning and are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of 'at least one' or 'one or more' can be used to emphasise an inclusive meaning but the absence of these terms should not be taken to infer any exclusive meaning. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described. In the above description, the apparatus described can alternatively or in addition comprise an apparatus which in some other examples comprises a distributed system of apparatus, for example, a client/server apparatus system. In examples where an apparatus provided forms (or a method is implemented as) a distributed system, each apparatus forming a component and/or part of the system provides (or implements) one or more features which collectively implement an example of the present disclosure. In some examples, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims can be suitably combined in any manner apparent to one of ordinary skill in the art. Separate references to an "example", "in some examples" and/or the like in the description do not necessarily refer to the same example and are also not mutually exclusive unless so stated and/or except as will be readily apparent to those skilled in the art from the description. For instance, a feature, structure, process, block, step, action, or the like described in one example may also be included in other examples, but is not necessarily included.

Each and every claim is incorporated as further disclosure into the specification and the claims are embodiment(s) of the present disclosure. Further, while the claims herein are provided as comprising specific dependencies, it is contemplated that any claims can depend from any other claims and that to the extent that any alternative embodiments can result from combining, integrating, and/or omitting features of the various claims and/or changing dependencies of claims, any such alternative embodiments and their equivalents are also within the scope of the disclosure.

## Claims

1. An apparatus comprising:
means for transmitting, to a network node, first information indicative of a capability of the apparatus to perform a phase reciprocity calibration procedure, wherein the phase reciprocity calibration procedure comprises the apparatus performing:
a first part of the phase reciprocity calibration procedure using at least one downlink, DL, Phase Differential Calibration Signal, PDCS, and
a second part of the phase reciprocity calibration procedure using at least one uplink, UL, PDCS;
means for receiving, from the network node, second information, wherein the second information is received based at least in part on the transmitted first information, and wherein the second information comprises information for configuring the apparatus to:
receive, from the network node, the at least one DL PDCS for enabling the apparatus to perform the first part of the phase reciprocity calibration procedure, and
transmit the at least one UL PDCS for enabling the apparatus to perform the second part of the phase reciprocity calibration procedure;
means for receiving, from the network node and based at least in part on the received second information, the at least one DL PDCS for enabling the apparatus to perform the first part of the phase reciprocity calibration procedure; and
means for transmitting, based at least in part on the received second information, the at least one UL PDCS for enabling the apparatus to perform the second part of the phase reciprocity calibration procedure.

2. The apparatus of claim 1, wherein the first information indicative of the capability of the apparatus to perform the phase reciprocity calibration procedure comprises an indication of at least one of the following:
that the apparatus comprises means for performing an analogue differential phase estimation;
that the apparatus supports a non-codebook-based UL pre-coding procedure when configured with the at least one DL PDCS and the at least one UL PDCS for enabling the apparatus to perform the first and second parts of the phase reciprocity calibration procedure; or
that the apparatus supports a non-codebook-based UL pre-coding procedure when configured with a sequence of DL PDCSs transmitted by the network node, wherein
each DL PDCS of the sequence is pre-coded for each configured UL MIMO layer of the apparatus.

3. The apparatus of any previous claim, wherein the first information indicative of the capability of the apparatus to perform the phase reciprocity calibration procedure comprises at least one of the following:
a request to receive the at least one DL PDCSs for enabling the apparatus to perform the first part of the phase reciprocity calibration procedure; or
a request to receive the at least one DL PDCSs, wherein the apparatus is not required to report one or more measurements on the received at least one DL PDCSs.

4. The apparatus of any previous claim, wherein the first information indicative of the capability of the apparatus to perform the phase reciprocity calibration procedure comprises at least one of the following:
a request for an allocation of at least one UL resource for transmitting the at least one UL PDCS;
a request for an allocation of at least one UL gap for transmitting the at least one UL PDCS; or
a request to transmit the at least one UL PDCSs for enabling the apparatus to perform the second part of the phase reciprocity calibration procedure.

5. The apparatus of any previous claim, wherein receiving the at least one DL PDCS comprises at least one of the following:
receiving, for each UL MIMO layer of the apparatus, at least one DL PDCS; or
receiving a sequence of DL PDCSs transmitted by the network node, wherein each DL PDCS of the sequence is pre-coded for each configured UL MIMO layer of the apparatus.

6. The apparatus of any previous claim, wherein receiving the at least one DL PDCS comprises at least one of the following:
receiving at least one non pre-coded DL PDCS; or
receiving, for at least some or all configured UL MIMO layers of the apparatus, at least one DL PDCS.

7. The apparatus of any previous claim, wherein the phase reciprocity calibration procedure comprises at least one of the following:
an analog phase calibration procedure;
equalising one or more reception channels of the apparatus with one or more transmission channels of the apparatus;
determining a phase differential between one or more receiver paths and one or more transmission paths of the apparatus;
calibrating one or more receiver paths and one or more transmission paths of Radio Frequency Front End, RFFE, circuitry of the apparatus such that the one or more receiver paths and the one or more transmission paths are reciprocal;
calibrating one or more transmission paths and one or more reception paths of RFFE circuitry of the apparatus such that the one or more transmission paths and the one or more reception paths are in phase coherence with each other; and
a live network over-the-air runtime procedure.

8. The apparatus of any previous claim, wherein the first part of the phase reciprocity calibration comprises at least one of the following:
performing a receive, Rx, dynamic calibration procedure during reception of the at least one DL PDCS;
determining, during reception of the at least one DL PDCS via at least one set of antenna ports of the apparatus, at least one set of DL phase differences between the at least one set of antenna ports;
determining, during reception of the at least one DL PDCS via at least one set of Rx paths of the apparatus, a phase differential between the at least one set of Rx paths;
determining at least one phase setting for DL reception for at least one set of receiver chains of the apparatus using the at least one DL PDCS; or
selecting at least one set of antennas of the apparatus to receive the at least one DL PDCS, and determining at least one set of phase difference values for the at least one set of antennas.

9. The apparatus of any previous claim, wherein the second part of the phase reciprocity calibration comprises at least one of the following:
performing a transmit, Tx, dynamic calibration procedure during transmission of the at least one UL PDCS;
determining, during transmission of the at least one UL PDCS via at least one set of antenna ports of the apparatus, at least one set of UL phase differences between the at least one set of antenna ports;
determining, during transmission of the at least one UL PDCS via at least one set of Tx paths of the apparatus, at least one phase differential between the at least one set of Tx paths;
determining at least one phase setting for UL transmission for at least one set of transmitter chains of the apparatus using the at least one UL PDCS; or
selecting at least one set of antennas of the apparatus to transmit the at least one UL PDCS, and determining at least one set of phase difference values for the at least one set of antennas.

10. The apparatus of any previous claim, wherein the at least one DL PDCS comprises at least one of the following:
a sequence of a plurality of DL PDCSs;
at least one pre-coded DL PDCSs;
a sequence of a plurality of DL PDCSs pre-coded for each of a plurality of configured UL MIMO layers of the apparatus; or
at least one Channel State Information Reference Signal, CSI-RS.

11. The apparatus of any previous claim, wherein the at least one UL PDCS comprises at least one of the following:
at least one Sounding Reference Signal, SRS; or
at least one signal transmitted by the apparatus that is not required to be validly received or decoded by the network node.

12. The apparatus of any previous claim, wherein the apparatus further comprises means for transmitting, to the network node, an indication of at least one of the following:
a number of configured UL MIMO layers of the apparatus;
a time period required for the apparatus to perform the second part of the phase reciprocity calibration;
a number or duration of phase iterations per symbol of the at least one UL PDCS per MIMO layer of the apparatus; or
a number or duration of phase iterations per symbol of the at least one DL PDCS per MIMO layer of the apparatus.

13. The apparatus of any previous claim, wherein the apparatus further comprises means performing the phase reciprocity calibration procedure.

14. The apparatus of claim 13, wherein the apparatus further comprises means for transmitting one or more pre-coded transmissions to the network node, wherein the transmission of the one or more pre-coded transmissions is based at least in part on the apparatus performing the phase reciprocity calibration procedure.

15. An apparatus comprising:
means for receiving, from a User Equipment, UE, first information indicative of a capability of the UE to perform a phase reciprocity calibration procedure, wherein the phase reciprocity calibration procedure comprises the UE performing:
a first part of the phase reciprocity calibration procedure using at least one downlink, DL, Phase Differential Calibration Signal, PDCS, and
a second part of the phase reciprocity calibration procedure using at least one uplink, UL, PDCS;
means for transmitting, to the UE, second information, wherein the second information is transmitted based at least in part on the received first information, and wherein the second information comprises information for configuring the UE to:
receive, from the apparatus, the at least one DL PDCS for enabling the UE to perform the first part of the phase reciprocity calibration procedure, and
transmit the at least one UL PDCS for enabling the UE to perform the second part of the phase reciprocity calibration procedure; and
means for transmitting, to the UE, the at least one DL PDCS for enabling the UE to perform the first part of the phase reciprocity calibration procedure.
